# EUROPEAN PATENT APPLICATION

(11) **EP 3 026 211 A1**
(43) Date of publication of application: **01.06.2016**
(21) Application number: 14290354.1
(22) Date of filing: 26.11.2014
(51) Int. Cl.: E21B 47/12, G01V 11/00

(54) **DOWN-HOLE PERMANENT TELEMETRY ON MONO-CONDUCTOR**

(71) Applicant: Services Pétroliers Schlumberger, 75007 Paris (FR); Schlumberger Holdings Limited, Road Town, Tortola 1110 (VG); Schlumberger Technology B.V., 2514 JG The Hague (NL)
(72) Inventor: Pohl, Didier, 92140 Clamart (FR); Santraine, Benjamin, 92140 Clamart (FR)
(74) Representative: Leonori, Céline

(57) **Abstract**

A communication system for wired downhole telemetry is presented. The communication system includes a downhole cable having a single conductor, a surface transceiver, and one or more downhole transceiver. The surface transceiver is configured to transmit data on at least a first predetermined downlink frequency range and at least a first predetermined uplink frequency range along the downhole cable. The one or more downhole transceiver is configured to receive data on at least the first predetermined downlink frequency range via the downhole cable and transmit data on at least the first predetermined uplink frequency range via the downhole cable.

## Description

### BACKGROUND

After a wellbore has been drilled, tests may be performed on formations surrounding the wellbore. Logging tests may be performed, and samples of formation fluids may be collected for chemical and physical analyses. The information collected from logging tests and analyses of properties of sampled fluids may be used to plan and develop wellbores and for determining their viability and potential performance.

Oil and gas wells may be instrumented with pressure sensors installed permanently downhole close to the formations, geological layers producing oil and/or gas. Pressure sensors may be used to determine reservoir parameters such as permeability. Pressure measurements may be transmitted to the surface through an electrical cable installed permanently alongside the production tubing. Downhole pressure values are then available in real time at surface for production engineers. These measurements are used to analyze the condition of the well and the oil and gas reservoir, as well as maximize the production without compromising the specifications and the integrity of the well and the reservoir.

Downhole pressure sensors are assembled with electronics for signal conditioning and transmitting. The electronics are able to sustain high temperature constraints due to its downhole position. It is protected from the external pressure by a metallic envelope and is hermetically sealed with the cable going up to the surface.

At the beginning of the well life, the pressure is generally high enough to allow the oil and gas to flow naturally up to the surface. As the production goes along, the pressure of the reservoir decreases until the pressure is too low to ensure a natural flow of the oil to the surface. This means that additional equipment is installed in the well to restore the oil flow to the surface. A downhole electrical pump may be added to restore oil flow. Electrical pumps are operated by a motor which is integrated in the downhole assembly. The electrical pump may have a three-phase motor powered from the surface by three electrical wires several kilometers long. The electrical wires are connected to a power converter which controls the rotational speed of the motor. The voltage in the wires may be around 4,000 volts and the current may be up to 100 amperes.

The high currents of the electrical wires and voltages in the electrical wires may induce high electrical noise in the electrical cable used for communicating from the surface with the downhole sensor gauges. These disturbances may prevent propagation of the telemetry signal on the downhole cable and a signal coming to the surface. Where propagation is prevented, the signals may not be properly analyzed and decoded, thereby preventing the delivery of pressure values from the downhole sensor gauges.

Some sensors used in wells may be precluded from use in wells using electrical pumps. Sensors based on a mono-conductor cable may have signals affected by the noise of the electrical pumps. Other sensors may be connected to the electrical wire connected to the electrical pump; however electrical protection, including high value inductance, for high voltages, as well as the inductance of the motor phases may limit the bandwidth of the telemetry to a bitrate around 10 bits per second. The bandwidth may be too low for pressure and temperature measurements to be transmitted each second from each of the downhole sensor gauges. This bandwidth also has the effect of shortening the phase of the motor, making transmission difficult.

A conductor, employing a twisted pair, may also be used for telemetry with differential signals on each wire of the twisted pair. Each wire of the twisted pair may be affected in the same way by the electrical disturbance. This effect may be lessened using differential demodulation. Differential demodulation may double the number of connections compared to a mono-conductor cable. The well head therefore may use two sealed connectors, one for each wire of the twisted pair. In specific cases, such as subsea environments, for example, the two sealed connectors may not be available.

Data may be transmitted on powered electrical cable. Transmitting on powered electrical cable may be used in electrical network monitoring and management or in remote monitoring, for electricity, gas, or water. The bitrate of this transmission scheme may be generally between 2.4 and 20 kbits/s.

### SUMMARY

This summary is provided to introduce a selection of concepts that are further described in the detailed description. This summary is not intended to identify key or essential features of the claimed subject matter, nor is it intended to be used as an aid in limiting the scope of the claimed subject matter.

In one aspect, the present disclosure describes a communication system for wired downhole telemetry. The communication system has a downhole cable, having one or more conductor, a surface transceiver, and a downhole transceiver. The surface transceiver is connected to the downhole cable and configured to transmit data on at least a first predetermined downlink frequency range along the downhole cable and receive data on at least a first predetermined uplink frequency range along the downhole cable. The downhole transceiver is connected to the downhole cable and configured to receive data on at least the first predetermined downlink frequency range via the downhole cable and transmit data on at least the first predetermined uplink frequency range via the downhole cable.

In another version, the present disclosure describes a non-transitory computer readable medium storing processor executable code that when executed by a processor causes the processor to transmit initiation data, receive initiation response data, transmit acknowledgement data, transmit a sensor data request, and receive sensor data. The initiation data is indicative of initiating communication with a downhole device on a first predetermined downlink frequency range. The downhole device, in one embodiment, is a downhole transceiver. The initiation response data is received from the downhole device on a first predetermined uplink frequency range. The acknowledgement data is transmitted to the downhole device acknowledging receipt of the one or more response data. The sensor data request is transmitted to the downhole device on the first predetermined downlink frequency range at a predetermined time interval. The sensor data is received from the downhole device on the first predetermined uplink frequency range. The processor executable code also causes the processor to repeat transmission of the initiation data, receiving of the initiation response data, and transmission of the acknowledgement data until the processor transmits acknowledgement data to each of the downhole device, if more than one downhole device is connected. Where there are multiple downhole devices, the processor executable code causes the processor to create a communication order for the downhole devices based on the initiation response data received from the downhole devices. The processor executable code also causes the processor to transmit system data to the downhole devices on a second predetermined downlink frequency.

In yet another version, a communication system kit for wired down-hole telemetry is described. The communication system kit has a downhole cable having one or more conductor, a surface transceiver, and a downhole transceiver. The surface transceiver is configured to be connected to the downhole cable and to transmit data on at least a first predetermined downlink frequency range and a second predetermined downlink frequency along the downhole cable and receive data on at least a first predetermined uplink frequency along the downhole cable. The downhole transceiver is configured to be connected to the downhole cable and to receive data on at least the first predetermined downlink frequency range and the second predetermined downlink frequency via the downhole cable and transmit data on at least the first predetermined uplink frequency range via the downhole cable.

### BRIEF DESCRIPTION OF DRAWINGS

To assist those of ordinary skill in the relevant art in making and using the subject matter hereof, reference is made to the appended drawings, which are not intended to be drawn to scale, and in which like reference numerals are intended to refer to similar elements for consistency. For purposes of clarity, components may be labeled in certain ones of the drawings but not in each drawing.
Figure 1 shows a schematic view of a mono-conductor downhole permanent telemetry system according to the present disclosure;
Figure 2 shows a schematic view of a communication system for wired down-hole telemetry in accordance with the present disclosure;
Figure 3 shows a graphical representation of a communications protocol used by the communication system of Figure 2, in accordance with the present disclosure;
Figure 4 shows a schematic view of a computer system in accordance with the present disclosure;
Figure 5 shows a diagrammatic representation of a method of initiating communicating between a surface transceiver and one or more downhole transceiver of the communications system in accordance with the present disclosure; and
Figure 6 shows a diagrammatic representation of a method for communicating between the surface transceiver and the one or more downhole transceiver of the communications system in accordance with the present disclosure.

### DETAILED DESCRIPTION

Specific embodiments of the present disclosure will now be described in detail with reference to the accompanying drawings. Further, in the following detailed description of embodiments of the present disclosure, numerous specific details are set forth in order to provide a more thorough understanding of the disclosure. However, it will be apparent to one of ordinary skill in the art that the embodiments disclosed herein may be practiced without these specific details. In other instances, well-known features have not been described in detail to avoid unnecessarily complicating the description.

It should also be noted that in the development of any such actual embodiment, numerous decisions specific to circumstance may be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure.

The terminology and phraseology used herein is for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited.

Furthermore, the description and examples are presented solely for the purpose of illustrating the different embodiments, and should not be construed as limiting the scope and applicability. While any composition or structure may be described herein as comprising certain materials, it should be understood that the composition could optionally comprise two or more different materials. In addition, the composition or structure can also comprise some components other than the ones already cited. The equipment, compositions and methods described herein may be used in any well operation. Examples include fracturing, acidizing, water control, chemical treatments, and wellbore fluid isolation and containment. Embodiments will be described for hydrocarbon production wells, but it is to be understood that they may be used for wells for production of other fluids, such as water or carbon dioxide, or, for example, for injection or storage wells.

It should also be understood that throughout this specification, when a range is described as being useful, or suitable, or the like, it is intended that any value within the range, including the end points, is to be considered as having been stated. Furthermore, each numerical value should be read once as modified by the term "about" (unless already expressly so modified) and then read again as not to be so modified unless otherwise stated in context. For example, "a range of from 1 to 10" is to be read as indicating each possible number along the continuum between about 1 and about 10. In other words, when a certain range is expressed, even if a few specific data points are explicitly identified or referred to within the range, or even when no data points are referred to within the range, it is to be understood that the inventors appreciate and understand that any data points within the range are to be considered to have been specified, and that the inventors have possession of the entire range and points within the range.

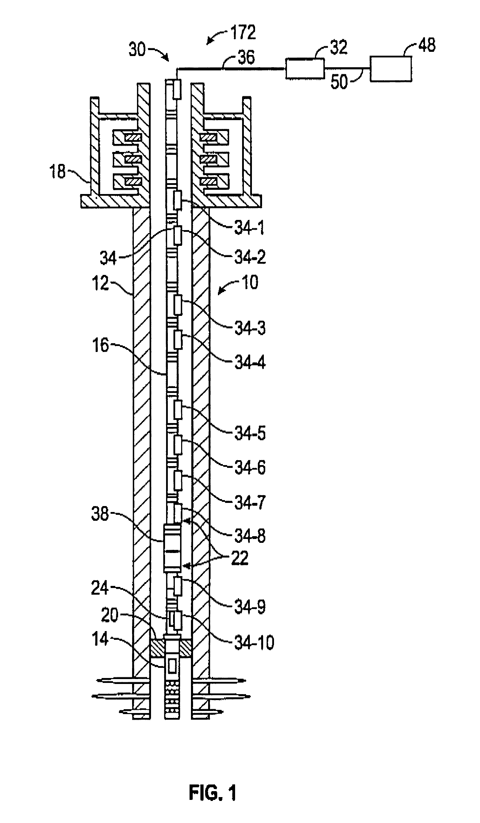

Referring now to the figures, Figure 1 shows a schematic view of a testing installation or a production installation. In particular, once a well 10 has been drilled through a formation, the drill string can be used to perform tests, and determine various properties of the formation through which the well 10 has been drilled. In the example of Figure 1, the well 10 has been lined with a steel casing 12 (cased hole) in the conventional manner, although similar systems can be used in unlined (open hole) environments. In order to test the formations, a sampling apparatus 14 may be placed in the well close to regions to be tested, to be able to isolate sections or intervals of the well, and to convey fluids from the regions of interest to the surface. This may be done using a jointed tubular drill pipe, drill string, production tubing, or the like (collectively, tubing 16) which extends from well-head equipment 18 at the surface (or sea bed in subsea environments) down inside the well 10 to a zone of interest. The well-head equipment 18 can include blow-out preventers and connections for fluid, power and data communication.

A packer 20 is positioned on the tubing 16 and can be actuated to seal the borehole around the tubing 16 at the region of interest. Various pieces of downhole equipment 22 are connected to the tubing 16 above or below the packer 20. The downhole equipment 22 may also be referred to herein as a "downhole tool". In any event, the downhole equipment 22 may include, but is not limited to: additional packers; tester valves; circulation valves; downhole chokes; firing heads; TCP (tubing conveyed perforator) gun drop subs; samplers; pressure gauges; downhole flow meters; downhole fluid analyzers; and the like. A tester valve 24 is located above the packer 20, and the sampling apparatus 14 is located below the packer 20, although the sampling apparatus 14 could also be placed above the packer 20 if desired.

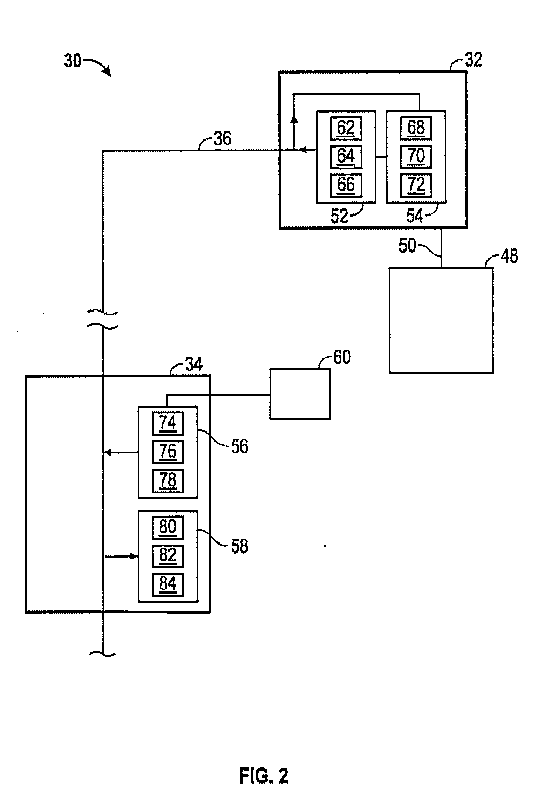

Shown in Figures 1 and 2, a communication system 30 may be deployed within the well 10 and may be configured for wired downhole telemetry. The communication system 30 may have a surface transceiver 32 to facilitate communication between the downhole equipment 22 and surface equipment, one or more downhole transceiver 34 to receive communication signals from the surface transceiver 32 and transmit communication signals from downhole equipment 22 to the surface, and a downhole cable 36 connecting the surface transceiver 32, the one or more downhole transceiver 34, and one or more downhole electrical pump 38 used to facilitate production of downhole fluids in a production installation. The downhole cable 36 may have one or more conductor connecting the surface transceiver 32 and the one or more downhole transceiver 34 for power supply and communications.

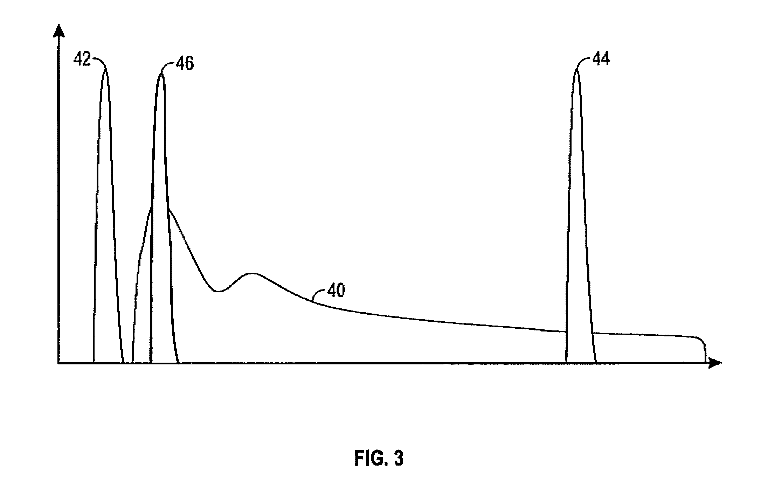

The communication system 30 may also facilitate synchronization between the surface transceiver 32 and the one or more downhole transceiver 34 to recover data from downhole equipment 22 on a regular basis by providing communications along the downhole cable 36 using a communication protocol which is substantially free from electrical noise generated by the one or more downhole electrical pump 38. As shown in Figure 3, the one or more downhole electrical pump 38 may generate electrical noise 40 across a range of frequencies along the downhole cable 36. In Figure 3, the X axis shows the relative frequencies available over the downhole cable 36 and the Y axis shows the relative strength of the signals transmitted across the frequencies of the X axis. The communication protocol may use a biphase signal at low frequency 42 for downlink communication and phase shift keying (PSK) modulation at high frequency 44 for the uplink communication. The low frequency 42, used for downlink communication from the surface transceiver 32 to the one or more downhole transceiver 34, may be below the range of frequencies of the electrical noise 40 of the downhole electrical pump 38. The biphase aspect of the low frequency 42 uses changes in voltage to indicate logical values, such as 1 or 0 in binary, for transmitting data. The high frequency 44, used for the uplink communication from the one or more downhole transceiver 34 to the surface transceiver 32, may be high in the range of frequencies of the electrical noise 40 of the downhole electrical pump 38 and outside of the dominant part of the electrical noise 40 thereby providing a high signal to noise ratio. The communication protocol may also use a biphase signal at an intermediate frequency 46 which provides for substantially higher bandwidth than the low frequency 42. The intermediate frequency 46 occurs in the dominant portion of the electrical noise 40 of the downhole electrical pump 38, but may be used for high bandwidth communication with the one or more downhole transceiver 34 while the downhole electrical pump 38 is not in operation.

The communication system 30 may be connected to a computer system 48, via the surface transceiver 32 and a communications link 50, to facilitate generation of signals to be transmitted by the surface transceiver 32 and to receive and interpret signals received by the surface transceiver 32 from the one or more downhole transceiver 34. The surface transceiver 32 may be provided with a surface transmitter 52 and a surface receiver 54 to transmit and receive signals, respectively, across the downhole cable 36. The one or more downhole transceiver 34 may also be provided with a downhole transmitter 56 and a downhole receiver 58 to transmit and receive signals, respectively, across the downhole cable 36. Additionally, the one or more downhole transceiver 34 may be connected to one or more downhole equipment 22 including one or more sensor 60 in order to receive information from the one or more downhole equipment 22 for transmission to the surface transceiver 32. The one or more sensor 60 may be pressure sensors, temperature sensors, or any other suitable sensors used to measure aspects of a downhole environment or a formation fluid within the downhole environment. The surface transceiver 32 and the one or more downhole transceiver 34 may operate to allow electronic signals from the computer system 48 to be converted to analogue signals for transmission across the downhole cable 36 to the one or more downhole transceiver 34 and for electrical signals from the one or more sensor 60 to be converted to analogue signals for transmission across the downhole cable 36 to the surface transceiver 32.

The surface transceiver 32 may include the surface transmitter 52 which has transmitter electronics 62 configured to receive an electrical output from the computer system 48, for example a communication initiation message used to initiate communication with the one or more downhole transceiver 34, a synchronization acknowledgement used to indicate the one or more downhole transceiver 34 has been assigned a place in a communication order, a system data message providing updating information for the one or more downhole transceiver 34, a system data request for determining system data characteristics for the one or more downhole transceiver 34, such as a software or firmware iteration currently employed on the one or more downhole transceiver 34, or a request for sensor data from the one or more sensor 60. In one embodiment, the transmitter electronics 62 may be provided with a modulator 64 which modulates the signal using a phase shift keying (PSK) scheme, such as binary phase shift keying (BPSK) for example. The modulator 64 may use differential Manchester encoding for generating the biphase signal to implement the BPSK scheme. The resulting modulated signal may be converted into an analogue signal by a digital to analogue converter (DAC) 66 for transmission via the downhole cable 36. The surface transmitter 52 may be configured to transmit a signal across the downhole cable 36 on differing frequencies based on a predetermined set of criteria. For example, the transmitter electronics 62 may be configured to transmit certain messages, such as sensor data requests, at a frequency range of 0 Hz - 40 Hz, shown in Figure 3 as the low frequency 42, and certain other messages, such as system data messages, on a frequency of about 2,500 Hz, shown in Figure 3 as the intermediate frequency 46. The frequency range of 0 Hz - 40 Hz may be below the range of frequencies of the electrical noise 40 generated by the downhole electrical pump 38. The transmitter electronics 62 may also be configured to transmit at the frequency range of 0 Hz - 40 Hz, low frequency 42, or the frequency of about 2,500 Hz, intermediate frequency 46, based on the operational status, of the one or more downhole electrical pump 38. In this embodiment, the transmitter electronics 62 may transmit using the low frequency 42, for instance transmitting sensor data requests, while the downhole electrical pump 38 is in operation. The transmitter electronics 62 may transmit using the intermediate frequency 46, for instance transmitting system data messages, while the downhole electrical pump 38 is not in operation.

The surface transceiver 32 may also include the surface receiver 54 which has receiver electronics 68 configured to receive a signal via the downhole cable 36, such as a signal transmitted via the downhole cable 36 by one of the one or more downhole transceiver 34. In one embodiment, the receiver electronics 68 may be capable of converting and demodulating the signal into an electrical signal suitable for the computer system 48. The receiver electronics 68 may be provided with an analogue to digital converter (ADC) 70 capable of converting a transmitted analogue signal received on the downhole cable 36 into a digital signal for demodulation. A demodulator 72, provided in the receiver electronics 68, may be capable of demodulating the digital signal which has been modulated using a PSK scheme such as quadrature phase shift keying (QPSK), for instance. The demodulated digital signal, which may comprise sensor data from the one or more sensor 60, responses from the one or more downhole transceiver 34, or other signals, may then be passed to the computer system 48. The surface receiver 54 may be configured to receive signals via the downhole cable 36 across a range of frequencies. For example, the receiver electronics 68 may be configured to receive signals from the one or more downhole transceiver 34 on a frequency range of between 90 kHz - 110 kHz, shown in Figure 3 as the high frequency 44, which may be high in the frequency range of electrical noise 40 produced by the downhole electrical pump 38.

The one or more downhole transceiver 34 may include the downhole transmitter 56 having transmitter electronics 74 configured to receive an electrical output signal from the one or more sensor 60, for example from an electrical or electro/mechanical interface of the one or more sensor 60. Such signals may be digital signals which may provide pressure, temperature, or other measurements of a downhole environment or formation fluids. The downhole transmitter 56 may transmit one or more type of messages having differing data, based on criteria such as requests from the surface transceiver 32. For example, the downhole transmitter 56 may transmit a communication initiation response to respond to the communication initiation message from the surface transceiver 32, a system data response to respond to the system data message requesting system data from the one or more downhole transceiver 34, or sensor data from the one or more sensor 60. In one embodiment, the transmitter electronics 74 may be provided with a modulator 76 which modulates the signal using a PSK scheme, such as QPSK for example. The resulting modulated signal may be converted into an analogue signal by a DAC 78 for transmission via the downhole cable 36 to the surface transceiver 32. The downhole transmitter 56 may be configured to transmit signals via the downhole cable 36 across a range of frequencies, for example on the frequency range of between 90 kHz - 110 kHz, e.g. the high frequency 44.

The one or more downhole transceiver 34 may also include the downhole receiver 58 which may be provided with receiver electronics 80 configured to receive a signal via the downhole cable 36, such as a signal transmitted via by the surface transceiver 32. In one embodiment, the receiver electronics 80 may be capable of converting and demodulating the signal into an electrical signal suitable for the one or more downhole transceiver 34 and the one or more sensor 60 to process and perform a predetermined action, as will be explained below in more detail. The receiver electronics 80 may be provided with an ADC 82 capable of converting a transmitted analogue signal received on the downhole cable 36 into a digtal signal for demodulation. A demodulator 84, provided in the receiver electronics 80, may be capable of demodulating the digital signal which has been modulated using a PSK scheme such as BPSK, for instance. The demodulated digital signal, which may comprise instructions or data requests from the computer system 48, responses from the surface transceiver 32, or other signals, may then cause the one or more downhole transceiver 34 to perform a predetermined action or request and receive data from the one or more sensor 60. The downhole receiver 58 may be configured to receive and interpret a signal from the downhole cable 36 on differing frequencies. For example, the receiver electronics 80 may be configured to receive messages at frequency ranges complimentary to the frequencies at which the surface transceiver 32 is configured to transmit, for instance the frequency range of 0 Hz - 40 Hz, the low frequency 42, and on the frequency of about 2,500 Hz, the intermediate frequency 46.

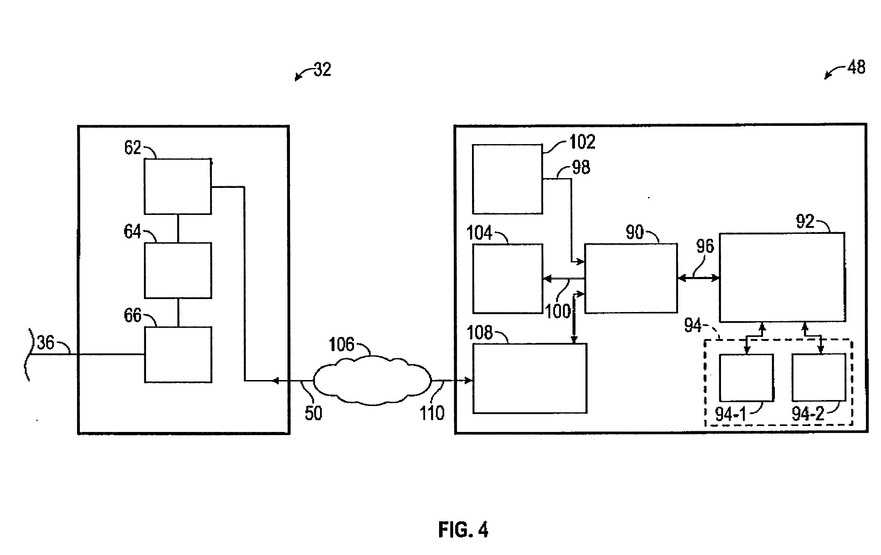

Referring now to Figure 4, the computer system 48 may comprise a processor 90, one or more non-transitory computer readable medium 92, and processor executable code 94 stored on the one or more non-transitory computer readable medium 92.

The processor 90 may be implemented as a single processor or multiple processors working together or independently to execute the processor executable code 94 described herein. Embodiments of the processor 90 may include a digital signal processor (DSP), a central processing unit (CPU), a microprocessor, a multi-core processor, and combinations thereof. The processor 90 is coupled to the non-transitory computer readable medium 92. The non-transitory computer readable medium 92 can be implemented as RAM, ROM, flash memory or the like, and may take the form of a magnetic device, optical device or the like. The non-transitory computer readable medium 92 can be a single non-transitory computer readable medium, or multiple non-transitory computer readable mediums functioning logically together or independently. The processor 90 is coupled to and configured to communicate with the non-transitory computer readable medium 92 via a path 96 which can be implemented as a data bus, for example. The processor 90 may be capable of communicating with an input device 102 and an output device 104 via paths 98 and 100, respectively. Paths 98 and 100 may be implemented similarly to, or differently from path 96. For example, paths 98 and 100 may have a same or different number of wires and may or may not include a multidrop topology, a daisy chain topology, or one or more switched hubs. The paths 96, 98 and 100 can be a serial topology, a parallel topology, a proprietary topology, or a combination thereof. The processor 90 is further capable of interfacing and/or communicating with one or more network 106, via a communications device 108 and a communications link 110 such as by exchanging electronic, digital and/or optical signals via the communications device 108 using a network protocol such as TCP/IP. The communications device 108 may be a wireless modem, digital subscriber line modem, cable modem, network bridge, Ethernet switch, direct wired connection or any other suitable communications device capable of communicating between the processor 90 and the network 106 and the surface transceiver 32. It is to be understood that in certain embodiments using more than one processor 90, the processors 90 may be located remotely from one another, located in the same location, or comprising a unitary multicore processor (not shown). The processor 90 is capable of reading and/or executing the processor executable code 94 and/or creating, manipulating, altering, and storing computer data structures into the non-transitory computer readable medium 92.

The non-transitory computer readable medium 92 stores processor executable code 94 and may be implemented as random access memory (RAM), a hard drive, a hard drive array, a solid state drive, a flash drive, a memory card, a CD-ROM, a DVD-ROM, a BLU-RAY, a floppy disk, an optical drive, and combinations thereof. When more than one non-transitory computer readable medium 92 is used, one of the non-transitory computer readable mediums 92 may be located in the same physical location as the processor 90, and another one of the non-transitory computer readable mediums 92 may be located in location remote from the processor 90. The physical location of the non-transitory computer readable mediums 92 can be varied and the non-transitory computer readable medium 92 may be implemented as a "cloud memory," i.e. non-transitory computer readable medium 92 which is partially or completely based on or accessed using the network 106. In one embodiment, the non-transitory computer readable medium 92 may store a database accessible by the computer system 48 and/or the surface transceiver 32. In this embodiment, the non-transitory computer readable medium 92 may also store sensor data from the one or more sensor 60.

The input device 102 transmits data to the processor 90, and can be implemented as a keyboard, a mouse, a touch-screen, a camera, a cellular phone, a tablet, a smart phone, a PDA, a microphone, a network adapter, a camera, a scanner, and combinations thereof. The input device 102 may be located in the same location as the processor 90, or may be remotely located and/or partially or completely network-based. The input device 102 communicates with the processor 90 via path 98.

The output device 104 transmits information from the processor 90 to a user, such that the information can be perceived by the user. For example, the output device 104 may be implemented as a server, a computer monitor, a cell phone, a tablet, a speaker, a website, a PDA, a fax, a printer, a projector, a laptop monitor, and combinations thereof The output device 104 communicates with the processor 90 via the path 100.

The network 106 may permit bi-directional communication of information and/or data between the processor 90, the network 106, and the surface transceiver 32. The network 106 may interface with the processor 90 and the surface transceiver 32 in a variety of ways, such as by optical and/or electronic interfaces, and may use a plurality of network topographies and protocols, such as Ethernet, TCP/IP, circuit switched paths, file transfer protocol, packet switched wide area networks, and combinations thereof. For example, the one or more network 106 may be implemented as the Internet, a LAN, a wide area network (WAN), a metropolitan network, a wireless network, a cellular network, a GSM-network, a CDMA network, a 3G network, a 4G network, a satellite network, a radio network, an optical network, a cable network, a public switched telephone network, an Ethernet network, and combinations thereof. The network 106 may use a variety of network protocols to permit bi-directional interface and communication of data and/or information between the processor 90, the network 106, and the surface transceiver 32.

In one embodiment, the processor 90, the non-transitory computer readable medium 92, the input device 102, the output device 104, and the communications device 108 may be implemented together as a smartphone, a PDA, a tablet device, such as an iPad, a netbook, a laptop computer, a desktop computer, or any other computing device.

The one or more non-transitory computer readable medium 92 may store the processor executable code 94, which may comprise a downhole communications program 94-1. The non-transitory computer readable medium 92 may also store other processor executable code 94-2 such as an operating system and applications programs such as a word processor, for example. The processor executable code for the downhole communications program 94-1 and the other processor executable code 94-2 may be written in any suitable programming language, such as C++, C#, Java, or Python, for example. In one embodiment, the downhole communications program 94-1 may be stored on one or more computer readable medium within the surface transceiver 32.

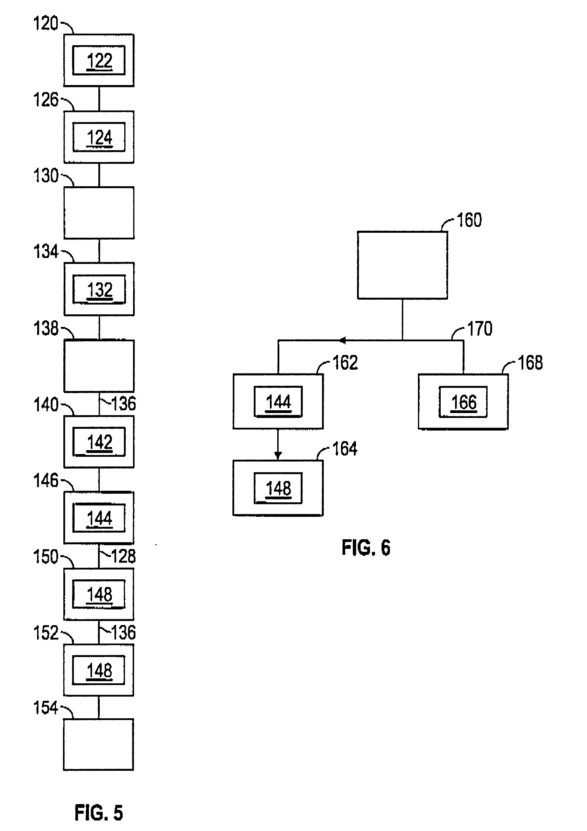

Referring now to Figure 5, shown therein is a diagrammatic representation of a method for communications initiation between the surface transceiver 32, the one or more downhole transceiver 34, and the computer system 48 of the communication system 30. The communications initiation method may establish a communications order for the one or more downhole transceiver 34 to communicate with the surface transceiver 32 across the downhole cable 36 without interference among the one or more downhole transceiver 34. As shown in Figure 1, in embodiments with a plurality of downhole transceivers 34-1 - 34-10, the communications order may be based on a Time Division Multiple Access (TDMA) scheme in which each of the plurality of downhole transceivers 34-1 - 34-10 may be configured by the communications initiation method to transmit at distinct time slots, where each of the plurality of downhole transceivers 34-1 - 34-10 has a given individual time slot for transmitting data to the surface in order to avoid collision.

As will be explained in more detail below, the TDMA communications order may be used to synchronize the transmission of the one or more downhole transceivers 34. The TDMA communications order may be established using a self-learning sequence, such as the communications initiation method, whereby initiation data 122 may be transmitted by the surface transceiver 32 to the one or more downhole transceivers 34 in order to identify the one or more downhole transceivers 34 in the communication system 30. Each of the one or more downhole transceiver 34 may respond randomly in a time slot. If a single downhole transceiver 34 responds within a given time slot, the response of that downhole transceiver 34 is received by the surface transceiver 32 and that downhole transceiver 34 may be acknowledged and assigned the individual time slot in which it communicated. Once that downhole transceiver 34 is acknowledged and assigned a time slot, it may not respond to further initiation data 122 transmitted by the surface transceiver 32 during the communication initiation. If multiple of the one or more downhole transceiver 34 responds in the same time slot, a collision may occur and responses may not be received or acknowledged by the surface transceiver 32. The communications initiation method may be repeated until each of the one or more downhole transceiver 34 has been acknowledged and assigned individual time slots.

In the communications initiation method, the one or more processor 90 of the computer system 48 may execute the processor executable code for the downhole communications program 94-1 at block 120. The downhole communications program 94-1 may cause the processor 90 to transmit the initiation data 122 to initiate communication with one or more downhole device 124. The initiation data 122 may be indicative of a data request causing the one or more downhole device 124 receiving the initiation data 122 to respond to the surface transceiver 32 transmitting the data request. The one or more downhole device 124 may be the one or more downhole transceiver 34, the one or more sensor 60, or any other downhole device which is capable or may be configured to communicate via the downhole cable 36.

The initiation data 122 may be passed to the surface transceiver 32 at block 126, and received by the transmitter electronics 62, causing the surface transceiver 32 to transmit the initiation data 122 via the downhole cable 36 to the one or more downhole device 124, and/or the one or more downhole transceiver 34, for example, on a first predetermined downlink frequency range 128. In one embodiment, after receiving the initiation data 122, the surface transmitter 52 may modulate the initiation data 122 using a PSK scheme such as BPSK. The modulated initiation data 122 may then be passed through the DAC 66 and transmitted along the downhole cable 36 to the one or more downhole transceiver 34. The first predetermined downlink frequency range 128 may be in the range of between 0 Hz - 40 Hz, the low frequency 42 for example, such that the first predetermined downlink frequency range 128 may be below the range of frequencies of the electrical noise 40 of the downhole electrical pump 38 and produce a sufficient signal to noise ratio to be received by the one or more downhole transceiver 34.

The one or more downhole transceiver 34 may receive the modulated initiation data 122 transmission at block 130. In one embodiment, the one or more downhole transceiver 34 may receive the modulated initiation data 122 transmission, passing the transmission through the ADC 70 of the downhole receiver 58 and then demodulate the initiation data 122 for interpretation by the one or more downhole transceiver 34.

The one or more downhole transceiver 34 may generate one or more initiation response data 132 at block 134. In one embodiment, the initiation response data 132 may be indicative of a response by the one or more downhole transceiver 34 responding to the initiation data 122. The initiation response data 132 may be transmitted randomly in a time slot, as a part of the self-learning sequence. The transmission during the random time slot may be based on a randomization element. In one embodiment, the one or more initiation response data 132 may be modulated using a PSK scheme such as QPSK, by the one or more downhole transceiver 34. The modulated initiation response data 132 may then be passed through the DAC 78 and transmitted along the downhole cable 36 to the surface transceiver 32. The randomization element may be, for example, based on a serial number for the one or more downhole transceiver 34 or one of its constituent components, based on sensor data generated by the one or more sensor 60 indicative of background noise received by the one or more sensor 60 at the time of receiving the initiation data 122, a hash function of data received by the one or more downhole transceiver 34, or any other suitable randomization element.

The surface transceiver 32 may receive the one or more initiation response data 132 from the one or more downhole device 124 on a first predetermined uplink frequency range 136 at block 138. The first predetermined uplink frequency range 136 may be in the range of 90 kHz-110 kHz, the high frequency 44 for example, such that the first predetermined uplink frequency range 136 may produce a sufficient signal to noise ratio to be received by the surface transceiver 32, given the frequency range of the electrical noise 40 generated by the one or more downhole electrical pump 38.

The surface transceiver 32, at block 140, may transmit one or more acknowledgment data 142 to certain of the one or more downhole device 124, acknowledging receipt of the one or more initiation response data 132. One of the one or more acknowledgment data 142 may be transmitted to the downhole device 124 transmitting the initiation response data 132 for which the acknowledgment data 142 is prompted. The one or more acknowledgment data 142 may be generated by the surface transceiver 32 or the computer system 48. In one embodiment, once the downhole device 124 has received the acknowledgment data 142, that downhole device 124 will no longer respond to initiation data 122.

Once each downhole device 124 has received the acknowledgment data 142, the surface transceiver 32 may transmit a sensor data request 144 at block 126 that may be generated by the surface transceiver 32 or the computer system 48. The sensor data request 144 may be transmitted on the first predetermined downlink frequency range 128 via the downhole cable 36 to the one or more downhole transceiver 34. The sensor data request 144 may be modulated and transmitted similarly or the same as the initiation data 122.

Receiving the sensor data request 144, the one or more downhole transceiver 34 may demodulate the sensor data request 144 similarly or the same as the initiation data 122. In one embodiment, upon receipt of the sensor data request 144, the one or more downhole transceiver 34 may request sensor data 148 from the one or more sensor 60 in communication with the one or more downhole transceiver 34 at block 150. The sensor data 148 provided by the one or more sensor 60 may be modulated and transmitted via the first predetermined uplink frequency range 136, similarly or the same as described above in relation to the initiation response data 132. In another embodiment, the one or more sensor 60 may transmit, continually or at regular intervals, the sensor data 148 to the one or more downhole transceiver 34, which may store the sensor data 148 in one or more computer readable medium local to the one or more downhole transceiver 34. The sensor data 148 transmitted to the one or more downhole transceiver 34 may be modulated and transmitted via the first predetermined uplink frequency range 116, as described above.

The surface transceiver 32 may receive one or more sensor data 148 from the one or more downhole transceiver 34 at block 152 via the downhole cable 36 on the first predetermined uplink frequency range 136. The surface transceiver 32 may receive and demodulate the sensor data 148 as described above in regards to the initiation response data 132. After receipt and demodulation of the sensor data 148, the surface transceiver 32 may pass the sensor data 148 to the computer system 48 at block 154.

The downhole communications program 94-1, when executed, may cause the processor 90 to repeat transmission of the initiation data 122, receiving the one or more initiation response data 132, and transmission of the one or more acknowledgment data 142 until the one or more processor 90 transmits acknowledgment data 142 to each of the one or more downhole transceiver 34. The downhole communications program 94-1 may also cause the processor 90 to create a communication order for the one or more downhole transceiver 34, where multiple downhole transceivers 34 are used. The communication order may be based on the one or more initiation response data 132 received from the one or more downhole transceiver 34.

Referring now to Figures 1 and 5, the TDMA communication order may be indicative of the order in which the one or more downhole transceiver 34 communicate during a predetermined time segment. In one embodiment, a plurality of downhole transceivers 34-1 - 34-10 may be connected to the downhole cable 36. The communication system 30 in this embodiment may perform the communications initiation method for establishing communications and communicating as described above in relation to Figure 5. The surface transceiver 32 may transmit the initiation data 122 to each of the plurality of downhole transceivers 34-1 - 34-10, with each of the plurality of downhole transceivers 34-1 - 34-10 receiving the same initiation data 122 transmission. Each of the plurality of downhole transceivers 34-1 - 34-10 responds to the initiation data 122 transmission by transmitting the initiation response data 132, as indicated above in a random time slot. In this embodiment, each of the plurality of downhole transceivers 34-1 - 34-10 may use the randomization element to selectively transmit the initiation response data 132 in a random time slot based on a serial number of one or more of the components of the downhole transceiver 34, based on the ambient noise recorded by the one or more sensor 60, or the like, for example. If the initiation response data 132 of two or more of the plurality of downhole transceivers 34-1- 34-10 is received by the surface transceiver 32 at the same time, the transmissions may be obscured and not properly received.

When the initiation response data 132 of one of the plurality of downhole transceivers 34-1 - 34-10 is received in a time slot, the surface transceiver 32 may detect that one of the plurality of downhole transceivers 34-1 - 34-10. The surface transceiver 32 may then assign the transmitter the time slot in which the one of the plurality of downhole transceivers 34-1 - 34-10 transmitted the initiation response data 132 and transmit the acknowledgment data 142 to the detected one of the plurality of downhole transceivers 34-1 - 34-10. The acknowledgment data 142 may configure the detected one of the plurality of downhole transceivers 34-1 - 34-10 for communication during the specified time slot. The surface transceiver 32 may repeat the initiation data 122 transmission and receive initiation response data 132 from one or more of the plurality of downhole transceivers 34-1 - 34-10 which have not yet been detected and assigned a time slot. This sequence may be repeated until each of the plurality of downhole transceivers 34-1 - 34-10 have received acknowledgment data 142 and been assigned a time slot. Upon completion of the TDMA communication order, the surface transceiver 32 may begin communications with the plurality of downhole transceivers 34-1 - 34-10, transmitting the sensor data request 144 and/or the system data 166 to the plurality of downhole transceivers 34-1 - 34-10.

Referring now to Figure 6, shown therein is a diagrammatic representation of communication using the communication system 30. After establishing the communications order at block 160, the computer system 48, executing the processor executable code for the downhole communications program 94-1, may cause the surface transceiver 32 to transmit the sensor data request 144 to the one or more downhole transceiver 34, at block 162 via the first predetermined downlink frequency range 128, the low frequency 42 which may be in the range of 0 Hz - 40 Hz and below the range of frequencies of the electrical noise 40. The surface transceiver 32 may transmit the sensor data request 144 repeatedly at predetermined time intervals, based on well production, upon initiation by the user, or any other suitable manner. In one embodiment, where the sensor data request 144 is repeatedly transmitted at predetermined time intervals, the sensor data request 144 may be retransmitted at 1,2, or 5 second intervals, for example. Each sensor data request 144 received by the one or more downhole transceiver 34 causes the one or more downhole transceiver 34 to transmit sensor data 148 via the first predetermined uplink frequency range 136 to the surface transceiver 32, at block 164, to be passed along to the computer system 48. In the embodiment above, using predetermined time intervals, the one or more downhole transceiver 34, receiving the sensor data request 144, may respond by transmitting sensor data 148 at complimentary time intervals of 1, 2, or 5 seconds, for example, to match the time intervals of the transmitted sensor data request 144.

The computer system 48 may also cause the surface transceiver 32 to transmit system data 166 at block 168 along the downhole cable 36 via a second predetermined downlink frequency 170. The second predetermined downlink frequency 170 may be about 2,500 Hz, e.g. the intermediate frequency 46. The second predetermined downlink frequency 170 may have a higher bandwidth than the first predetermined downlink frequency range 128 while using the same transmission modulation, such as BPSK, for example. As previously described, the surface transceiver 32 may transmit signals on the first predetermined downlink frequency range 128 or the second predetermined downlink frequency 170 based on a predetermined set of criteria. The predetermined set of criteria may be, for example, available updates for one or more processor executable code stored on the one or more downhole transceiver 34, an operational status of the downhole electrical pump 38, an operational status of the one or more downhole transceiver 34, or an operational status of the processor code stored on the one or more downhole transceiver 34.

In one embodiment, where the second predetermined downlink frequency 170 is about 2,500 Hz, e.g. the intermediate frequency 46, the surface transceiver 32 may transmit system data 166 based on the operational status of the downhole electrical pump 38, where the downhole electrical pump 38 may create an unacceptable signal to noise ratio during operation for transmission using the second predetermined downlink frequency 170. In this embodiment, the surface transceiver 32 may transmit using the second predetermined downlink frequency 170 while the downhole electrical pump 38 is not operating due to scheduled non-operational periods or while the downhole electrical pump 38 is non-operational for maintenance purposes, for example. The system data 166 may be in the form of software or firmware updates for the one or more downhole transceiver 34.

Referring again to Figure 1, the communication system 30 may be in the form of a communication system kit 172 for downhole telemetry. The communication system kit 172 may comprise the downhole cable 36, the surface transceiver 32, and the one or more downhole transceiver 34. The surface transceiver 32 may be configured as described above, capable of transmitting using a PSK scheme along the first predetermined downlink frequency range 128, between 0 to 40 Hz, and the second predetermined downlink frequency 170, about 2,500 Hz, and capable of receiving signals using a PSK scheme along the first predetermined uplink frequency range 136, e.g. between about 90 to 110 kHz. The one or more downhole transceiver 34 may be configured as described above, capable of transmitting using a PSK scheme along the first predetermined uplink frequency range 136, and capable of receiving signals using a PSK scheme along the first predetermined downlink frequency range 128 and the second predetermined downlink frequency 170.

Although a few embodiments of the present disclosure have been described in detail above, those of ordinary skill in the art will readily appreciate that many modifications are possible without materially departing from the teachings of the present disclosure. Accordingly, such modifications are intended to be included within the scope of the present disclosure as defined in the claims.

## Claims

1. A communication system for wired down-hole telemetry, comprising:
a downhole cable having one or more conductor;
a surface transceiver, connected to the downhole cable, the surface transceiver configured to transmit data on at least a first predetermined downlink frequency range along the downhole cable and receive data on at least a first predetermined uplink frequency range along the downhole cable wherein the first predetermined uplink frequency range does not overlap with the first predetermined downlink frequency range; and
one or more downhole transceiver, connected to the downhole cable, the one or more downhole transceiver configured to receive data on the first predetermined downlink frequency range via the downhole cable and transmit data on at least the first predetermined uplink frequency range via the downhole cable.

2. The communication system of claim 1, wherein the first predetermined downlink frequency range is between 0 and 40 Hz and wherein the first predetermined uplink frequency range is between 90 and 110 kHz.

3. The communication system of claim 1, wherein the surface transceiver is further configured to transmit data on at least the first predetermined downlink frequency range and at least a second predetermined downlink frequency, and the one or more downhole transceiver is further configured to receive data on at least the first predetermined downlink frequency range and the second predetermined downlink frequency.

4. The communication system of claim 3, wherein the second predetermined downlink frequency is about 2,500 Hz.

5. The communication system of claim 1, wherein the data transmitted by the surface transceiver comprises one or more of a group comprising: an initiation data, a system data, an acknowledgement data, and a request for sensor data and wherein the data transmitted by the one or more downhole transceiver comprises one or more of a group comprising: an initiation response data and sensor data.

6. One or more non-transitory computer readable medium storing processor executable code that when executed by one or more processors cause the one or more processor to:
transmit initiation data onto a downhole cable indicative of initiating communication to one or more downhole device on a first predetermined downlink frequency range;
receive one or more initiation response data from the one or more downhole device via the downhole cable on a first predetermined uplink frequency range;
assign individual time slots for communication with the one or more downhole device;
transmit one or more acknowledgment data to certain of the one or more downhole device via the downhole cable acknowledging receipt of the one or more response data;
transmit a sensor data request to the one or more downhole device on the first predetermined downlink frequency range via the downhole cable at a predetermined time intervals corresponding to the individual time slots; and
receive one or more sensor data from the one or more downhole device via the downhole cable on the first predetermined uplink frequency range.

7. The one or more non-transitory computer readable medium of claim 6, wherein the processor executable code further causes the one or more processors to repeat transmission of the initiation data, receive the one or more initiation response data, and transmit the one or more acknowledgement data until the one or more processor transmits acknowledgement data to each of the one or more downhole device.

8. The one or more non-transitory computer readable medium of claim 7, wherein the processor executable code further causes the one or more processors to create a communication order for the one or more downhole device based on the one or more response data received from the one or more downhole device.

9. The one or more non-transitory computer readable medium of claim 8, wherein the communication order is indicative of the order in which the one or more downhole devices communicate during a predetermined time segment.

10. The one or more non-transitory computer readable medium of claim 6, wherein the processor executable code further causes the one or more processors to transmit system data to the one or more downhole device on a second predetermined downlink frequency.

11. The one or more non-transitory computer readable medium of claim 10, wherein the processor executable code causes the one or more processors to transmit the system data based on one or more of a group comprising: available updates for one or more processor executable code stored on the one or more downhole device, an operational status of a downhole electrical pump, an operational status of the one or more downhole device, and an operational status of the processor executable code stored on the one or more downhole device.

12. A communication system kit for wired down-hole telemetry, comprising:
a downhole cable having one or more conductor;
a surface transceiver configured to be connected to the downhole cable and to transmit data on at least a first predetermined downlink frequency range along the downhole cable and receive data on at least a first predetermined uplink frequency range along the downhole cable wherein the first predetermined uplink frequency range does not overlap with the first predetermined downlink frequency range; and
one or more downhole transceiver configured to be connected to the downhole cable and to receive data on at least the first predetermined downlink frequency range via the downhole cable and transmit data on the first predetermined uplink frequency range via the downhole cable.

13. The communication system kit of claim 12, wherein the first predetermined downlink frequency range is between 0 and 40 Hz and wherein the first predetermined uplink frequency range is between 90 and 110 kHz.

14. The communication system kit of claim 12, wherein the surface transceiver is further configured to transmit data on at least the first predetermined downlink frequency range and at least a second predetermined downlink frequency, and the one or more downhole transceiver is further configured to receive data on at least the first predetermined downlink frequency range and the second predetermined downlink frequency.

15. The communication system of claim 12, wherein the data transmitted by the surface transceiver comprises one or more of a group comprising: an initiation data, a system data, an acknowledgement data, and a request for sensor data and wherein the data transmitted by the one or more downhole transceiver comprises one or more of a group comprising; an initiation response data and a sensor data.
